(19) Europäisches Patentamt
European Patent Office
Office européen des brevets

(11) **EP 1 358 450 B1**

(12) **EUROPÄISCHE PATENTSCHRIFT**

(45) Veröffentlichungstag und Bekanntmachung des Hinweises auf die Patenterteilung:
**14.06.2006 Patentblatt 2006/24**

(21) Anmeldenummer: **02708319.5**

(22) Anmeldetag: **29.01.2002**

(51) Int Cl.:
***G01F 23/284*** (2006.01)

(86) Internationale Anmeldenummer:
**PCT/EP2002/000902**

(87) Internationale Veröffentlichungsnummer:
**WO 2002/063247 (15.08.2002 Gazette 2002/33)**

(54) **VERFAHREN UND VORRICHTUNG ZUR GROBUNTERSCHEIDUNG EINES FÜLLGUTES IN EINEM BEHÄLTER IN FLÜSSIGKEIT ODER SCHÜTTGUT**

METHOD AND DEVICE FOR ROUGH DISCRIMINATION BETWEEN THE LIQUID OR BULK MATERIAL STATE OF A FILLING MATERIAL IN A CONTAINER

PROCEDE ET DISPOSITIF DE DIFFERENTIATION GROSSIERE ENTRE DU LIQUIDE ET DES MATERIAUX EN VRAC DANS UN RECIPIENT

(84) Benannte Vertragsstaaten:
**DE FR GB**

(30) Priorität: **08.02.2001 DE 10105652**

(43) Veröffentlichungstag der Anmeldung:
**05.11.2003 Patentblatt 2003/45**

(73) Patentinhaber: **VEGA Grieshaber KG**
**77709 Wolfach (DE)**

(72) Erfinder: **GAISER, Martin**
**72275 Alpirsbach (DE)**

(74) Vertreter: **Maiwald Patentanwalts GmbH**
**Elisenhof,**
**Elisenstrasse 3**
**80335 München (DE)**

(56) Entgegenhaltungen:
**WO-A-01/88489**          **DE-A- 4 332 071**
**US-A- 5 629 706**          **US-A- 6 047 598**

• **PATENT ABSTRACTS OF JAPAN vol. 009, no. 125 (C-283), 30. Mai 1985 (1985-05-30) & JP 60 013009 A (SHIN NIPPON SEITETSU KK), 23. Januar 1985 (1985-01-23)**

## Beschreibung

### Technisches Gebiet

Die Erfindung betrifft allgemein Verfahren zur automatischen Grobunterscheidung eines Füllgutes in einem Behälter in Flüssigkeit oder Schüttgut durch Analyse eines Echosignals, insbesondere Analyse der hieraus generierten Hüllkurve einer Füllstandmesseinrichtung. Ferner betrifft die Erfindung allgemein Vorrichtungen zur automatischen Grobunterscheidung eines Füllgutes in einem Behälter in Flüssigkeit oder Schüttgut durch Analyse eines Echosignals, insbesondere Analyse der hieraus generierten Hüllkurve sowie Füllstandmessgeräte, die insbesondere nach dem Impulsechoprinzip arbeiten und ein reflektiertes Echosignal abtasten. Hier sind somit insbesondere Ultraschall- oder Radarfüllstandmessgeräte von Interesse.

Füllstandmesseinrichtungen, die nach dem Impulsechoprinzip arbeiten und ein reflektiertes Echosignal abtasten, erzeugen aus dem abgetasteten Echosignal eine Reihe von Informationen zu jedem Echo im Echobild bzw. der sogenannten Hüllkurve. Die Erzeugung einer Hüllkurve aus Echosignalen ist hinlänglich bekannt und dementsprechend bedarf es hier keinen weiteren Erläuterungen zu dieser Technik (siehe beispielsweise: DE 44 07 369 C2; M. Scholnik, "Introduction to Radar Systems, 2. Auflage, 1980, McGraw-Hill; Peter Devine, "Radar level measurement - the user's guide", VEGA Controls Ltd., 2000, ISBN 0-9538920-0-X).

### Hintergrund der Erfindung

Füllstandmessgeräte bzw. -Sensoren, die durch Vermessung einzelner Echos in der Hüllkurve die Füllstandhöhe ermitteln sind bekannt. So ist aus der EP 1 039 273 A2 ein Verfahren zur Füllstandsmessung nach dem Radarprinzip bekannt, mit dessen Hilfe ein unebener, insbesondere gewölbter Boden durch Untersuchung des Messsignals bzw. der Hüllkurve auf ein typisches Rauschsignalverhalten hin ermittelbar ist. Wird dieses typische Rauschsignalverhalten ermittelt, so wird der Leerzustand des Behälters detektiert. Ein Charakteristikum für das Rauschsignalverhalten des Messsignals besteht in sprunghaften zufälligen Änderungen der lokalen Maxima oder in zunehmender Amplitude der lokalen Minima oder Maxima mit steigender Frequenz. Aus der DE 43 32 071 A1 ist ein Verfahren zur Füllstandsmessung nach dem Radarprinzip bekannt, bei dem die aktuelle Echofünktion mit einer einer ungestörten Messung entsprechenden, gespeicherten ungestörten Echofunktion verglichen wird und festgestellte Abweichungen im Antennenbereich und den sich an die Antenne anschließenden Nahbereich zur Erkennung einer Ansatzbildung und/oder sonstigen Störungen ausgewertet werden. Ferner zeigt die GB 2 123 237 A einen mit Mikrowellen arbeitenden Füllstandsdetektor, der nicht nach dem Echoprinzip arbeitet, sonder den reflektierten Strahl mit einem mittels eines Wellenleiters abgezweigten Strahls zur Interferenz bringt.

Bei den bisherigen Geräten ist es zur Verbesserung der Auswertung der Hüllkurve notwendig, per Hand einzugeben, ob es sich bei dem zu messenden Füllgut um Flüssigkeit oder Schüttgut handelt. Durch diese manuelle Eingabe wird die Art der Vermessung der Hüllkurve und damit die Ermittlung des Füllstands geändert. So wird, wenn vorgegeben ist, dass es sich bei dem Füllgut um eine Flüssigkeit handelt, die zu vermessende Amplitude in einer vorbestimmten Amplitude vor dem Maximum der Hüllkurve gelegt. Falls die Bedienperson vorgegeben hat, dass es sich bei dem Füllgut um Schüttgut handelt, wird als zu vermessende Amplitude der Anfang der Hüllkurve bis zum Maximum vermessen.

Zusammenfassend ist festzustellen, dass nach dem Stand der Technik eine bessere Vermessung der einzelnen Echos einer Hüllkurve eines Echosignals in Abhängigkeit von der Art des Füllgutes nur dann möglich ist, wenn eine Grobunterscheidung per Hand durch eine Bedienperson am Füllstandmessgerät erfolgt.

### Darstellung der Erfindung

Das der Erfindung zugrundeliegende technische Problem besteht darin, ein Verfahren und eine Vorrichtung bereitzustellen, die eine automatische Grobunterscheidung eines Füllguts in einem Behälter in Flüssigkeit oder Schüttgut vornehmen. Es soll somit insbesondere eine Möglichkeit geschaffen werden, dass ein insbesondere nach dem Impulsechoprinzip arbeitendes und ein reflektiertes Echosignal abtastendes Füllstandgerät automatisch eine Grobunterscheidung des Füllguts in Flüssigkeit oder Schüttgut vornimmt.

Dieses technische Problem wird durch ein Verfahren mit den Merkmalen der Ansprüche 1,9 oder 12 wie auch durch eine Vorrichtung mit Merkmalen der Ansprüche 16, 23 oder 24 und auch durch ein Füllstandmessgerät mit den Merkmalen des Anspruchs 25 gelöst.

Der Erfindung liegt der Gedanke zugrunde, erstmals die einzelnen Echos einer Hüllkurve auf bestimmte Charakteristika, die zumindest einen Hinweis auf die Art des Füllguts, nämlich Flüssigkeit oder Schüttgut, geben, zu untersuchen. So ist es möglich, diese Grobunterscheidung in Abhängigkeit von der Breite der einzelnen Echos einer Hüllkurve in einem Echosignal zu treffen. Es wird hierbei ausgenutzt, dass bedingt durch die Profilgebung eines Schüttguts in einem Produkt eher breite Echos auftreten. Falls es sich bei dem Füllgut um eine Flüssigkeit handelt, treten in der Hüllkurve eher schmale Echos auf. In dem man somit die Echobreite aller Echos in einer Echokurve bzw. dem Echobild mit einem vorbestimmten, durch einfache Versuche festzulegenden Vergleichsechobreitenwert in Relation stellt, kann, wenn man feststellt, dass die Anzahl der breiten Echos größer ist als die Anzahl der schmalen Echos, darauf geschlossen werden, dass es sich bei dem Füllgut um Schüttgut handelt. Andernfalls wäre es Flüssigkeit. Unter Umständen ist es auch zweckmäßig, anzugeben, dass es sich um eine Mischung aus diesen zwei grundsätzlichen Füllgutarten handelt.

Als Alternative hierzu ist es aber auch möglich, die Hüllkurve darauf zu untersuchen, wie der Abstand der einzelnen zu detektierenden Echos zueinander ist. Hier macht man sich den Effekt zunutze, dass, falls es sich bei dem Füllgut um eine Flüssigkeit handelt, die Echos eher in gleichen Abständen zueinander auftreten. Falls man also feststellt, dass die Echos in gleichmäßigen Abständen im Echosignal vorhanden sind, so kann man dann Rückschlüsse auf die Art des Füllguts ziehen. Als Beispiel sei der Fall genannt, dass man mehr als drei äquidistante Echos ermittelt. In diesem Fall wird ausgegeben, dass es sich bei dem Füllgut um eine Flüssigkeit handelt.

Eine weitere Alternative bestünde darin, dass man die Grobunterscheidung in Abhängigkeit von der Ermittlung eines Rührwerks trifft. Wird ein Rührwerk im Echosignal erkannt, so lässt sich darauf schließen, dass es sich bei dem Füllgut um Flüssigkeit handelt.

Es ist selbstverständlich auch möglich, eine oder mehrere der vorgenannten Alternativen für die Grobunterscheidung des Füllguts in Flüssigkeit oder Schüttgut miteinander zu kombinieren, um die Sicherheit der Erkennung der Art des Füllguts zu erhöhen. Ferner ist es selbstverständlich auch möglich, diese einzelnen Alternativen, wenn sie miteinander kombiniert werden, einander gegenüber zu gewichten, d. h. jeweils mit einem vorgegebenen (u.U. auch veränderbaren) Faktor zu multiplizieren. Diese Faktoren können selbstverständlich für jede Art der Grobunterscheidung, die zuvor erläutert wurde, gleich sein, aber auch unterschiedlich sein. Durch die entsprechende Gewichtung kann der ein oder anderen vorgestellten Art der Grobunterscheidung mehr oder weniger Gewicht beigemessen werden.

Die Art der Grobunterscheidung in Abhängigkeit von der Breite der einzelnen Echos einer Hüllkurve kann insbesondere dadurch getroffen werden, dass die Anzahl der Echos mit einer Breite größer als eine Vergleichsechobreite und die Anzahl der Echos mit einer Breite kleiner als die Vergleichsechobreite ermittelt wird. Für die Grobunterscheidung wird dann die größere ermittelte Echoanzahl herangezogen. So sei hier als Beispiel genannt, dass in einer Hüllkurve vier Echos ermittelt werden, die größer als eine Vergleichsechobreite sind und zwei Echos, die kleiner als die Vergleichsechobreite sind. Dann wird die Grobunterscheidung dahingehend getroffen, dass es sich wohl um ein Schüttgut handelt, da für Schüttgut eher charakteristisch ist, dass die Breite der Echos größer ist als bei einer Flüssigkeit.

Eine vorteilhafte Ausführungsform dieses Verfahrens sieht also vor, dass nach der Detektion der einzelnen Echos im Echosignal mit den bekannten (mathematischen) Mitteln die Breiten einzelner Echos in einem Echosignal einer Hüllkurve ermittelt werden. Daraufhin wird die Anzahl von Echos mit einer Breite, die größer oder gleich ist als eine Vergleichsechobreite ermittelt. Ebenfalls wird die Anzahl von Echos mit einer Breite, die kleiner ist als eine Vergleichsechobreite ermittelt. Daraufhin wird ein die Art des Füllgutes bestimmendes Signal in Abhängigkeit von der im Wert größeren ermittelten Anzahl von Echobreiten ausgegeben.

Bei der Alternative zur Grobunterscheidung des Füllguts in Schüttgut oder Flüssigkeit, bei dem die äquidistanten Echos in einem Echosignal ermittelt werden, wird jeweils der Abstand zwischen benachbarten Echos einer Hüllkurve gemessen. Es werden dann vorzugsweise alle Echos, die zueinander einen in ein vorbestimmtes Toleranzband (d.h. einen Abstandsbereich) fallenden Abstand aufweisen, also äquidistante Echos aufsummiert. Der Abstand der Echos wird vorzugsweise so berechnet, dass die jeweiligen Orte der Maxima der einzelnen Echos ermittelt werden und der Abstand zwischen diesen Maxima gemessen wird. Das Toleranzband kann ein festgelegter Wertbereich sein, beispielsweise +-0,1 m. Insbesondere ist es vorteilhaft, den ersten Abstand zwischen Nullpunkt und erstem Echo als Referenzabstand herzunehmen. In diesem Fall ist es beispielweise vorteilhaft, das Toleranzband mit $\pm$ 50 cm festzulegen, d.h., als äquivalente Echos werden all diejenigen Echos betrachtet, deren Abstand zueinander gleich dem Referenzabstand $\pm$ 50 cm ist. Wird als Referenzabstand ein anderer Echoabstand festlegt, so ist das Toleranzband vorzugsweise kleiner $\pm$ 50 cm festzulegen.

Bei der weiteren Alternative der Grobentscheidung die unter Berücksichtigung der Ermittlung eines Rührwerks getroffen wird, werden vorzugsweise Echos einer aktuellen Hüllkurve mit den entsprechenden Echos der vorhergehenden Hüllkurve verglichen. Es ist nämlich festzustellen, dass Echos von laufenden Rührwerken sich dadurch auszeichnen, dass ihre Amplitude stark schwankt, oder dass Echos mit großem Signal-Rauschabstand, d. h. die Amplitude des Echos über dem Systemrauschen oder dem abklingenden Sendesignal, periodisch verschwinden und wieder auftreten. Derartige Echos können markiert und von der Füllstandsentscheidung ausgeschlossen werden. Im vorliegenden Fall werden sie vorzugsweise dazu verwendet, dass ein Rührwerk erkannt wird und dementsprechend ausgegeben wird, dass es sich bei dem Füllgut um eine Flüssigkeit handelt. Insbesondere werden zur Ermittlung der Amplitudenschwankung einzelner Echos zwei Hüllkurven verglichen und deren Amplitudenschwankung mit einem Vergleichswert verglichen.

Wie bereits zuvor erläutert, können die einzelnen Arten der Grobunterscheidung, wie sie zuvor beschrieben wurden, einzeln verwendet werden oder beliebig miteinander kombiniert werden. In diesem Fall ist es vorteilhaft, dass die Information von jeder Art der Füllgut-Grobunterscheidung mit einem Gewichtungsfaktor multipliziert wird und diese daraus entstehenden Werte aufaddiert und durch die Summe der Gewichtungsfaktoren geteilt werden, um eine Wahrscheinlichkeit zu ermitteln, ob es sich um Flüssigkeit oder Schüttgut handelt. Insbesondere ist es dann von Vorteil, ' dass der daraus resultierende Wert mit einem Vergleichswert verglichen wird. Ist beispielsweise die ermittelte Größe kleiner als dieser Vergleichswert, so ist ein Signal auszugeben, das für die Flüssigkeit repräsentativ ist. Im anderen Fall ist das Signal auszugeben, das für Schüttgut repräsentativ ist.

Eine entsprechende Vorrichtung zur Unterscheidung eines Füllguts in einem Behälter in Flüssigkeit oder Schüttgut umfasst in einer Ausführungsform eine Einrichtung zur Ermittlung der Echobreiten von Echos einer generierten Hüllkurve, eine Einrichtung zur Ermittlung der Anzahl von Echos mit einer Breite größer als eine Vergleichsechobreite und der Anzahl von Echos mit einer Echobreite kleiner als die Vergleichsechobreite. Ferner ist eine Füllgutart-Signalausgabeeinrichtung vorhanden, die ein eine Flüssigkeit repräsentierendes Signal ausgibt, wenn die Anzahl von Echos mit einer Echobreite größer als eine Vergleichsechobreite größer ist als die Anzahl von Echos mit einer Echobreite kleiner als eine Vergleichsechobreite.

Eine alternative Vorrichtung umfasst eine Einrichtung zum Ermitteln der Anzahl von äquidistanten Echos einer generierten Füllkurve und einer Einrichtung zum Ausgeben eines die Art des Füllgutes bestimmenden Signals in Abhängigkeit von der ermittelten Anzahl von äquidistanten Echos.

Eine weitere alternative Vorrichtung zur Grobunterscheidung eines Füllguts in einem Behälter in Flüssigkeit oder Schüttgut ist mit einer Einrichtung ausgestattet zur Ermittlung eines Rührwerks durch Auswertung der Echos einer generierten Hüllkurve und einer Einrichtung zum Ausgeben eines die Art des Füllgut repräsentierenden Signals in Abhängigkeit von der Ermittlung eines Rührwerks.

Eine weitere bevorzugte Ausführungsform kann eine oder mehrere der vorgenannten Einrichtungen umfassen, so dass die verschiedenen Arten der Grobunterscheidung miteinander kombiniert sind. Die einzelnen Einrichtungen arbeiten entsprechend den zuvor beschriebenen Verfahren.

Abschließend ist noch anzumerken, dass die vorgenannten Verfahren beispielsweise in einem Auswerteprogramm zum Auswerten generierter Hüllkurven implementiert werden kann. Derartige Auswerteprogramme sind beispielsweise unter der Marke Echofox® der Firma VEGA Grießhaber KG, Deutschland bekannt. Dementsprechend können erfindungsgemäße Verfahren und Vorrichtungen bzw. die entsprechend arbeitende Software entweder in separaten Auswerteeinrichtungen implementiert werden oder, wenn es gewünscht ist, unmittelbar in Füllstandmessgeräten integriert werden. Füllstandmessgeräte der hier interessierenden Art sind im übrigen alle bekannten Füllstandmessgeräte, die ein reflektiertes Echosignal abtasten, d. h. eine Hüllkurve generieren. Derartige Füllstandmessgeräte sind beispielsweise Ultraschall-Füllstandmessgeräte oder Radar-Füllstandmessgeräte, insbesondere sogenannte Puls-Radar-Füllstandmessgeräte.

## Kurze Beschreibung der Zeichnungen

Im folgenden sind zur weiteren Erläuterung und zum besseren Verständnis mehrere Ausführungsbeispiele der Erfindung unter Bezugnahme auf die beigefügten Zeichnungen näher beschrieben. Es zeigt:

Fig. 1     eine schematische Seitenansicht eines Füllstandmessgeräts, das im Deckenbereich eines Behälters eingebaut ist,

Fig. 2     eine schematische Seitenansicht eines Füllstandmessgeräts mit verschiedenen Elektronikeinheiten,

Fig. 3     ein Flussdiagramm, das die Art der Grobunterscheidung in Flüssigkeit oder Schüttgut anhand der Echobreiten veranschaulicht,

Fig. 4     ein Flussdiagramm, das die Art der Grobunterscheidung in Flüssigkeit oder Schüttgut anhand der Ermittlung äquidistanter Echos veranschaulicht,

Fig. 5     ein Flussdiagramm, das die Art der Grobunterscheidung in Flüssigkeit oder Schüttgut anhand der Ermittlung eines Rührwerks veranschaulicht,

Fig. 6     ein Flussdiagramm, das eine Kombination der verschiedenen Arten der Grobunterscheidung in Flüssigkeit oder Feststoff veranschaulicht, und

Fig. 7     eine beispielhafte Hüllkurve aus einzelnen Echos und der darin zu ermittelnden Echocharakteristika.

## Beschreibung bevorzugter Ausführungsbeispiele der Erfindung

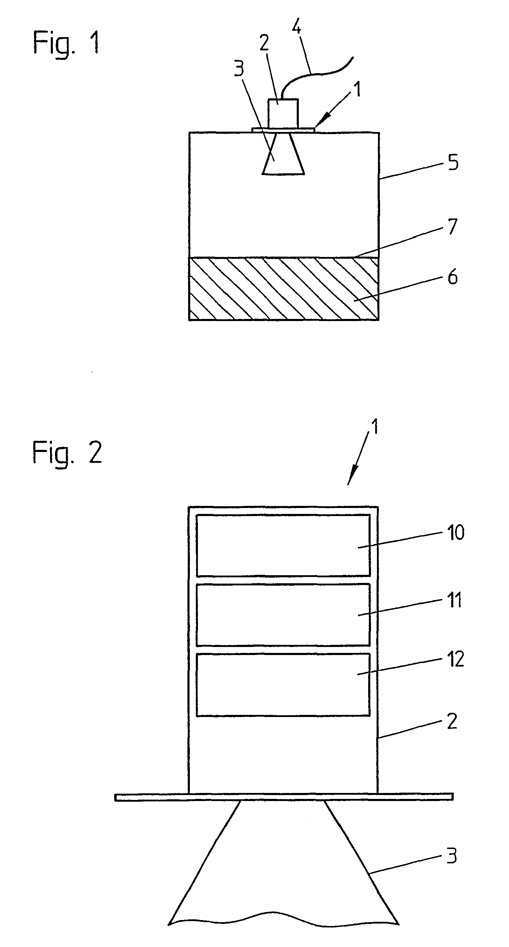

Aus der schematischen Darstellung gemäß der Fig. 1 ist ersichtlich, dass ein Füllstandmessgerät 1 im Dek-

kenbereich eines Behälters 5 montiert ist. In dem Behälter 5 befindet sich ein Füllgut 6, Schüttgut oder Flüssigkeit, das eine Füllgutoberfläche 7 ausbildet.

Das im Behälter 5 montierte Füllstandmessgerät 1 umfasst ein Gehäuse 2 und eine Antenne 3. Es ist über ein Kabel 4, insbesondere eine sog. 4-20 mA-Zweidrahtschleife, an eine hier nicht dargestellte Stromversorgungs- und Kommunikationseinrichtung angeschlossen.

In der äußerst schematischen Darstellung gemäß der Fig. 2 ist das Füllstandmessgerät 1 mit einer Auswerteeinrichtung 10, einer Sendeeinrichtung 11 und einer Empfängereinrichtung 12 dargestellt. Mit der Sendeeinrichtung 11 werden kurze Radarimpulse im Mikrowellenbereich über die Antenne 3 in Richtung der Füllgutoberfläche 7 ausgesendet. An der Füllgutoberfläche 7 werden diese Signale reflektiert und über die gleiche Antenne 3 empfangen. In der Empfängereinrichtung 12 werden diese gemäß dem Stand der Technik weiter verarbeitet und in der Auswerteeinrichtung 10 ausgewertet. Hierzu wird in bekannter Weise eine Hüllkurve aus den einzelnen Echosignalen gebildet. Diese Hüllkurve wird dann wiederum mittels mathematischer Methoden näher untersucht, insbesondere wie es in den nachfolgenden Flussdiagrammen veranschaulicht ist.

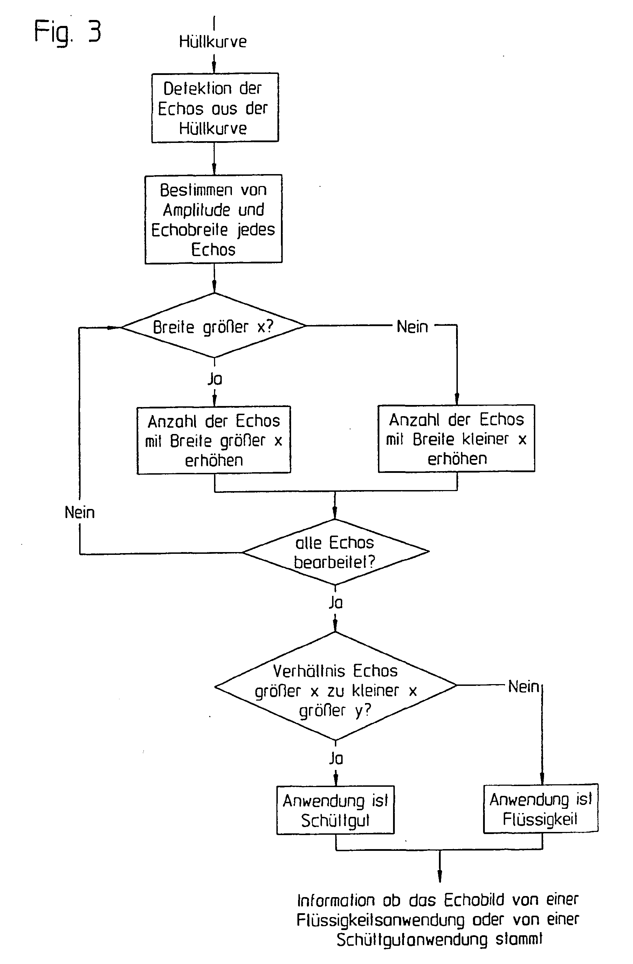

In der Fig. 3 ist eine erste Art der Grobunterscheidung in Flüssigkeit oder Schüttgut anhand der Echobreiten der einzelnen Echos einer Hüllkurve veranschaulicht. Wie daraus ersichtlich ist, wird die Hüllkurve so mathematisch aufbereitet, dass die einzelnen Echos der Hüllkurve detektiert werden. Es wird dann die Amplitude der einzelnen Echos wie auch deren Echobreite ermittelt. In einer Wiederholungsschleife wird dann jedes Mal ermittelt, ob die Breite eines Echos größer oder kleiner als ein Vergleichswert x ist. Wenn alle Echos abgearbeitet sind, wird das Verhältnis der Anzahl der Echos größer x zu der Anzahl der Echos kleiner x mit einem weiteren Vergleichswert y verglichen. Ist das genannte Verhältnis der Echobreiten größer als dieser zweite Vergleichswert, so wird die Information ausgegeben, dass es sich um Schüttgut handelt. Andernfalls wird ausgegeben, dass es sich bei der Anwendung um Flüssigkeit handelt. Selbstverständlich ist es auch möglich, anstatt die Anzahl der Echos mit einer Breite größer x in das Verhältnis der Anzahl der Echos kleiner x zu setzen, unmittelbar die größere Anzahl der Echos zu verwenden, um eine Aussage über die Art des Füllgutes zu treffen.

Es sei hier nochmals herausgestellt, dass bei dieser Ausführungsform der Erfindung es sich bei dem Vergleichswert x um einen Schwellwert handelt, mit dem die Echobreite zur Klassifizierung jedes Echos in Flüssigkeit oder Schüttgut erfolgt. Bei dem zweiten Vergleichswert y handelt es sich um einen Schwellwert des Verhältnisses aller Echos mit der Echobreite größer x zu allen Echos mit der Echobreite kleiner x zur Klassifizierung des Echobildes in Flüssigkeit oder Schüttgut.

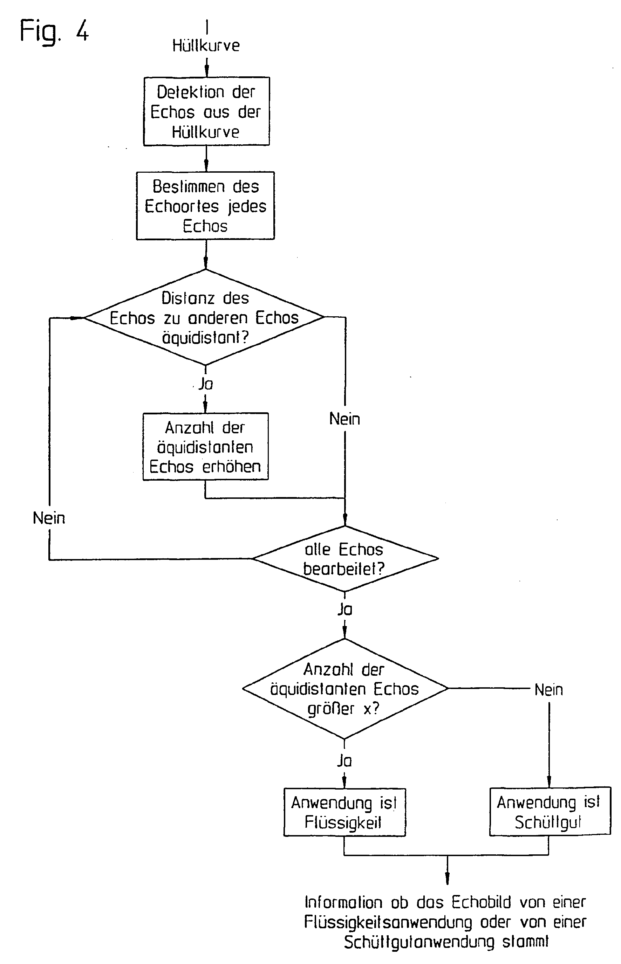

Bei der in der Fig. 4 dargestellten Ausführungsform eines erfindungsgemäßen Verfahrens zur Grobunterscheidung der Art des Füllguts in Flüssigkeit oder Schüttgut anhand der Echoorte wird wiederum die Hüllkurve auf einzelne Echos detektiert. Es wird dann der Echoort jedes Echos ermittelt, beispielsweise indem man die Orte der Maxima der Echos bestimmt. Es wird dann der Abstand jedes Echo zu einem anderen Echo gemessen und überprüft, ob der Abstand mit einem bereits ermittelten Abstand übereinstimmt (zumindest der Unterschied in einem bestimmten Toleranzband liegt). Wiederum erfolgt eine Schleife bis alle Echos abgearbeitet sind, so dass man am Schluss dieser Schleife die Anzahl der äquidistanten Echos im Echobild hat. Die Anzahl der äquidistanten Echos wird dann mit einem Vergleichswert x verglichen. Ist die Anzahl größer als dieser Vergleichswert, wird ausgegeben, dass es sich um Flüssigkeit handelt, wenn dieser Vergleich zu verneinen ist, wird ausgegeben, dass es sich um Schüttgut handelt.

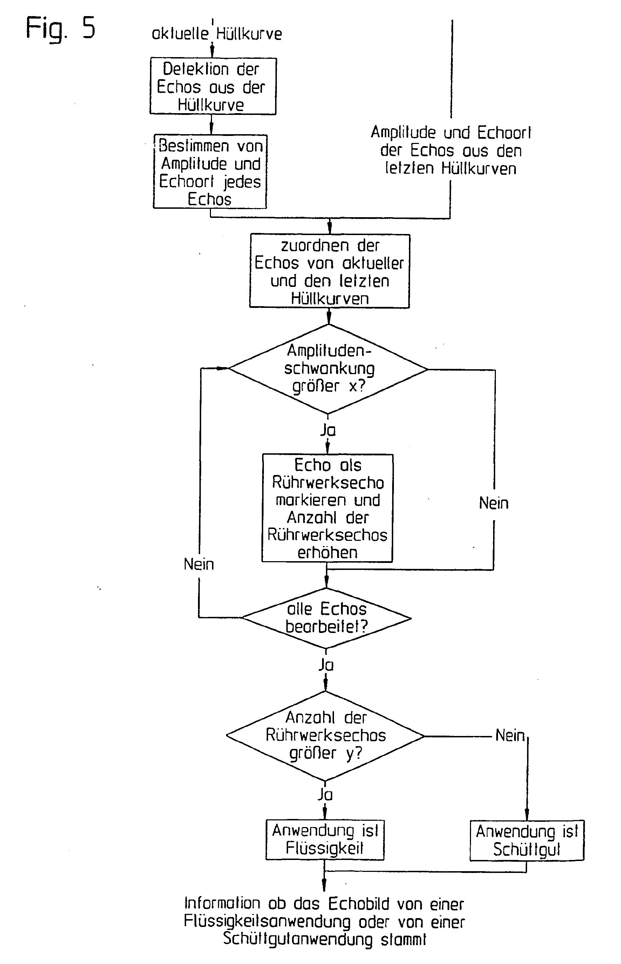

In der Fig. 5 ist ein Flussdiagramm zur Ermittlung eines Rührwerks dargestellt. Wie bereits zuvor wird auch hier die aktuelle Hüllkurve auf einzelne Echos detektiert. Es wird dann die Amplitude und der Echoort jedes Echos ermittelt. Diese Informationen werden gespeichert. Es erfolgt dann eine Zuordnung der Echos einer aktuellen Hüllkurve und der letzten Hüllkurve oder der vorletzten Hüllkurve usw. (beispielsweise auch mehrere frühere Hüllkurven). Daraus ermittelt man die Amplitudenschwankung. Ist diese Amplitudenschwankung größer als ein Vergleichswert x, so wird eine Aufsummierung mit einem zuvor gegebenen Wert vorgenommen. Wiederum erfolgt dies in Abarbeitung einer Art Schleife, so dass alle Echos abgearbeitet werden. Dann erfolgt die Abfrage, ob die Anzahl der als Rührwerksechos ermittelten Echos größer als ein weiterer Vergleichswert y ist. Wenn dies zu bejahen ist, so wird ausgegeben, dass es sich um eine Flüssigkeit handelt, andernfalls wird ausgegeben, dass es sich um Schüttgut handelt.

Es sei hier abschließend noch hervorgehoben, dass es sich hier bei dem Vergleichswert x um einen Schwellwert für die Amplitudenschwankung eines Echos über die Zeit zur Entscheidung, ob ein Echo als Rührwerksecho akzeptiert wird, handelt. Bei dem Vergleichswert y handelt es sich um den Schwellwert für die Anzahl der Rührwerksechos, zur Klassifizierung des Echobildes in Flüssigkeit oder Schüttgut.

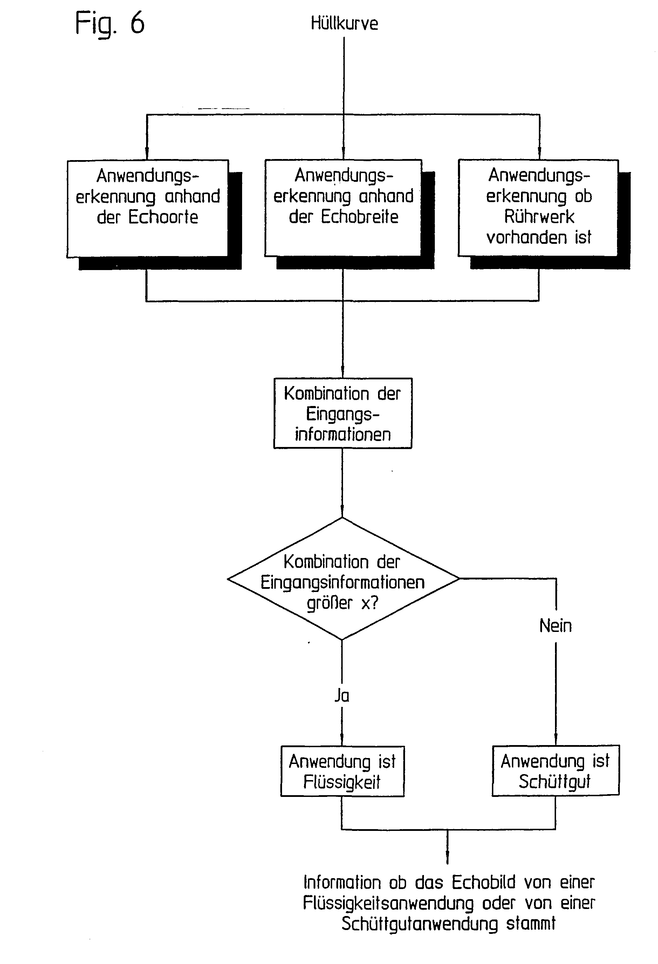

In der Fig. 6 ist eine Kombination der vorgenannten Arten der Grobunterscheidung dargestellt. Hier erfolgen also alle drei zuvor erläuterten Arten der Grobunterscheidung. Diese Eingangsinformationen werden wiederum miteinander kombiniert, beispielsweise durch Gewichtung, die nachfolgend noch näher erläutert wird. Dann wird der daraus ermittelte Kombinationswert mit einem Vergleichswert x verglichen. Ist festzustellen, dass der ermittelte Wert größer als der Vergleichswert ist, wird ausgegeben, dass es sich um Flüssigkeit handelt, andernfalls wird ausgegeben, dass es sich um Schüttgut handelt.

Es ist also festzustellen, dass hier die Informationen der einzelnen Anwendungserkennungen kombiniert werden, und somit die einzelnen Erkennungen keine Ja-/Nein-Entscheidung als Ausgang haben, sondern eine Wahrscheinlichkeit wie gut das Echobild zur Anwendung passt (z. B. 0% = sicher Flüssigkeit oder 100% = sicher Schüttgut). Die Kombination der Eingangsinformation kann beispielsweise nach folgender Formel erfolgen:

$$\frac{Info1 \times Gewichtung1 + Info2 \times Gewichtung2 + Info3 \times Gewichtung3}{Gewichtung1 + Gewichtung2 + Gewichtung3}$$

Als Spezialfall kann die Gewichtung 1 und/oder die Gewichtung 2 und/oder die Gewichtung 3 mit dem Wert 0 angenommen werden. D. h. es wird nur eine Auswahl der eingehenden Informationen verwendet.

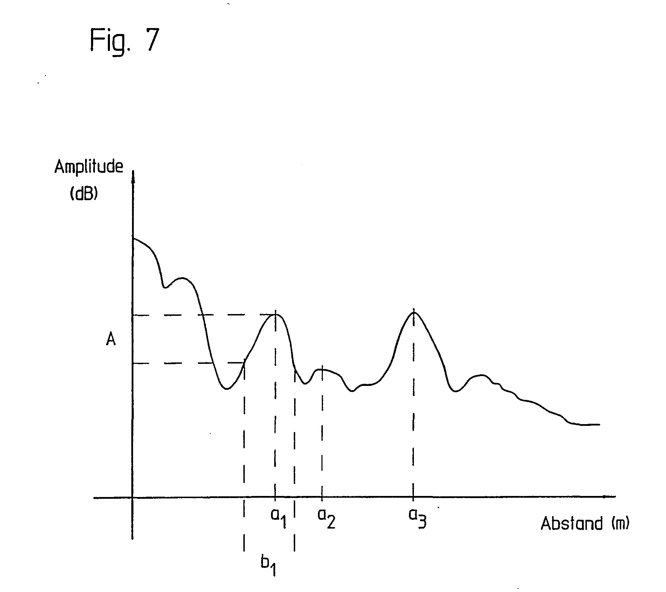

Schließlich ist in der Fig. 7 noch beispielhaft eine Hüllkurve dargestellt, in der mehrere Echos zu detektieren sind. Die einzelnen Echoorte sind $a_1$, $a_2$ und $a_3$. In diesem Beispiel sind also die Abstände der einzelnen Echos untereinander verschieden, so dass die Anzahl der äquidistanten Echos null anzusetzen ist. Die Breite der Echos wird anhand feststehender Parameter ermittelt, beispielsweise wird ein bestimmter Amplitudenwert vor und nach dem ermittelten Echomaximum dazu verwendet. Die Breite des Echos ist dann der dazwischen liegende Abstand. Hier also die Echobreite vorgegeben durch einen vorbestimmten Rauschwert A vom Maxima. Daraus ergibt sich bei dem Echo mit dem Echoort $a_1$ die Echobreite $b_1$.

**Patentansprüche**

1. Verfahren zur Grobunterscheidung eines Füllgutes in einem Behälter in Flüssigkeit oder Schüttgut unter Verwendung einer ein reflektiertes Echosignal abtastenden Füllstandmesseinrichtung, bei dem die Grobunterscheidung in Abhängigkeit von der Breite der einzelnen Echos einer Hüllkurve in einem Echosignal getroffen wird.

2. **Verfahren nach Anspruch 1,**
   **dadurch gekennzeichnet, dass** die Anzahl der Echos mit einer Breite größer als eine Vergleichsechobreite und die Anzahl der Echos mit einer Breite kleiner als die Vergleichsechobreite ermittelt wird und die größere ermittelte Echoanzahl für die Grobunterscheidung herangezogen wird.

3. Verfahren nach Anspruch 1 oder 2,
   **gekennzeichnet durch** folgende Verfahrensschritte:

   - Ermitteln der Breiten einzelner Echos in einem Echosignal einer Hüllkurve,
   - Ermitteln der Anzahl von Echos mit einer Breite, die größer oder gleich ist als eine Vergleichsechobreite (x),
   - Ermitteln der Anzahl von Echos mit einer Breite, die kleiner ist als eine Vergleichsechobreite (x), und
   - Ausgeben eines die Art des Füllgutes bestimmenden Signals in Abhängigkeit von der im Wert größeren ermittelten Anzahl von Echobreiten.

4. Verfahren nach einem der voranstehenden Ansprüche,
   **gekennzeichnet durch** zusätzliches Ermitteln der Anzahl von äquidistanten Echos in einem Echosignal und Ausgeben eines die Art des Füllgutes bestimmenden Signals auch in Abhängigkeit von der ermittelten Anzahl von äquidistanten Echos.

5. Verfahren nach Anspruch 4,
   **dadurch gekennzeichnet, dass** der Abstand zwischen benachbarten Echos gemessen wird und alle Echos, die zueinander einen in ein vorbestimmtes Toleranzband fallenden Abstand aufweisen, als äquidistante Echos aufsummiert werden.

6. Verfahren nach einem der voranstehenden Ansprüche,
   **dadurch gekennzeichnet, dass** die Grobunterscheidung zusätzlich unter Berücksichtigung der Ermittlung eines Rührwerks unter Verwendung der Füllstandmesseinrichtung getroffen wird, wobei zur Feststellung, ob ein Rührwerk vorhanden ist, die Echos einer aktuellen Hüllkurve mit den entsprechenden Echos der vorhergehenden Hüllkurve zur Ermittlung einer Amplitudenschwankung verglichen werden.

7. Verfahren nach Anspruch 6,
   **dadurch gekennzeichnet, dass** die aus dem Vergleich zweier aufeinanderfolgender Hüllkurven ermittelte Amplitudenschwankung mit einem Vergleichswert (x2) verglichen wird, und bei Feststellung, dass die Amplitudenschwankung größer ist als der Vergleichswert (x2), ein eine Flüssigkeit repräsentierendes Signal ausgegeben wird.

8. Verfahren zur Grobunterscheidung eines Füllgutes in einem Behälter in Flüssigkeit oder Schüttgut unter Verwendung einer ein Echosignal abtastenden Füllstandmesseinrichtung, bei dem die Grobunterscheidung in Abhängigkeit von der Anzahl von äquidistanten Echos in einem Echosignal getroffen wird.

9. Verfahren nach Anspruch 8,
**gekennzeichnet durch**

   - Ermitteln der Anzahl von äquidistanten Echos in einem Echosignal und
   - Ausgeben eines die Art des Füllgutes bestimmenden Signals in Abhängigkeit von der ermittelten Anzahl von äquidistanten Echos.

10. Verfahren nach Anspruch 8 oder 9,
**dadurch gekennzeichnet, dass** die ermittelte Anzahl von äquidistanten Echos mit einer Vergleichsanzahl (x1) verglichen wird, wobei bei einer Anzahl von äquidistanten Echos größer als die Vergleichsanzahl (x1) das eine Flüssigkeit kennzeichnende Signal ausgegeben wird.

11. Verfahren zur Grobunterscheidung eines Füllgutes in einem Behälter in Flüssigkeit oder Schüttgut unter Verwendung einer ein Echosignal abtastenden Füllstandmesseinrichtung, bei dem die Grobunterscheidung in Abhängigkeit von der Ermittlung eines Rührwerks getroffen wird, wobei zur Feststellung, ob ein Rührwerk vorhanden ist, die Echos einer aktuellen Hüllkurve mit den entsprechenden Echos der vorhergehenden Hüllkurve zur Ermittlung einer Amplitudenschwankung verglichen werden.

12. Verfahren nach Anspruch 11 oder 12,
**dadurch gekennzeichnet, dass** die aus dem Vergleich zweier aufeinanderfolgender Hüllkurven ermittelte Amplitudenschwankung mit einem Vergleichswert (x2) verglichen wird, und bei Feststellung, dass die Amplitudenschwankung größer ist als der Vergleichswert (x2), ein eine Flüssigkeit repräsentierendes Signal ausgegeben wird.

13. Verfahren nach Anspruch 1 und 8 und/oder 11 oder nach Anspruch 8 und 11,
**dadurch gekennzeichnet, dass** die jeweilige Grobunterscheidung mit einem Gewichtungsfaktor multipliziert wird.

14. Vorrichtung zur Grobunterscheidung eines Füllgutes in einem Behälter in Flüssigkeit oder Schüttgut, mit

   - einer Einrichtung zur Ermittlung der Echobreiten von Echos einer generierten Hüllkurve,
   - einer Einrichtung zur Ermittlung der Anzahl von Echos mit einer Echobreite größer als eine Vergleichsechobreite und der Anzahl von Echos mit einer Echobreite kleiner als die Vergleichsechobreite, und
   - einer Füllgutart-Signalausgabeeinrichtung, die ein eine Flüssigkeit repräsentierendes Signal ausgibt, wenn die Anzahl von Echos mit einer Echobreite größer als eine Vergleichechobreite größer ist als die Anzahl von Echos mit einer Echobreite kleiner als eine Vergleichsechobreite.

15. Vorrichtung nach Anspruch 14,
**dadurch gekennzeichnet, dass** zusätzlich eine Einrichtung vorhanden ist, mit der die Anzahl von äquidistanten Echos in einem Echosignal ermittelbar ist und die Füllgutart-Signalausgabeeinrichtung derart ausgebildet ist, dass sie ein eine Flüssigkeit repräsentierendes Signal ausgibt, wenn die Anzahl von Echos mit einer Echobreite größer als eine Vergleichsechobreite größer ist als die Anzahl von Echos mit einer Echobreite kleiner als eine Vergleichsechobreite und die Anzahl von äquidistanten Echos größer ist als ein Vergleichswert.

16. Vorrichtung nach Anspruch 15,
**dadurch gekennzeichnet, dass** die zusätzliche Einrichtung so ausgebildet ist, dass der Abstand zwischen benachbarten Echos messbar ist und alle Echos, die zueinander einen in ein vorbestimmtes Toleranzband fallenden Abstand aufweisen, als äquidistante Echos aufsummierbar sind.

17. Vorrichtung nach einem der Ansprüche 14-16,
**dadurch gekennzeichnet, dass** zusätzlich eine Rührwerk-Detektionseinrichtung vorhanden ist, die so ausgebildet ist, um zur Rührwerkdetektion die Echos einer aktuellen Hüllkurve mit den entsprechenden Echos der vorhergehenden Hüllkurve zur Ermittlung einer Amplitudenschwankung vergleichen zu können, und dass die Füllgutart-Signalausgabeeinrichtung derart ausgebildet ist, dass sie ein eine Flüssigkeit repräsentierende Signal ausgibt, wenn zusätzlich ein Rührwerk ermittelt ist.

18. Vorrichtung nach Anspruch 17,
**dadurch gekennzeichnet, dass** die Rührwerk-Detektionseinrichtung so ausgebildet ist, dass die aus dem Vergleich zweier aufeinanderfolgender Hüllkurven ermittelte Amplitudenschwankung mit einem Vergleichswert (x2) verglichen wird, und bei Feststellung, dass die Amplitudenschwankung größer ist als der Vergleichswert (x2), ein eine Flüssigkeit repräsentierendes Signal ausgegeben wird.

19. **Vorrichtung nach einem der Ansprüche 14-18,**
**dadurch gekennzeichnet, dass** zusätzlich eine Einrichtung vorhanden ist, mit der die Anzahl von äquidistanten Echos in einem Echosignal ermittelbar ist.

20. Vorrichtung zur Grobunterscheidung eines Füllgutes in einem Behälter in Flüssigkeit oder Schüttgut, mit

- einer Einrichtung zum Ermitteln der Anzahl von äquidistanten Echos einer generierten Hüllkurve und
- einer Einrichtung zum Ausgeben eines die Art des Füllgutes bestimmenden Signals in Abhängigkeit von der ermittelten Anzahl von äquidistanten Echos.

21. Vorrichtung zur Grobunterscheidung eines Füllgutes in einem Behälter in Flüssigkeit oder Schüttgut, mit

- einer Einrichtung zur Ermittlung eines Rührwerks durch Auswertung der Echos einer generierten Hüllkurve, wobei die Einrichtung so ausgebildet ist, um zur Rührwerkdetektion die Echos einer aktuellen Hüllkurve mit den entsprechenden Echos der vorhergehenden Hüllkurve zur Ermittlung einer Amplitudenschwankung vergleichen zu können,
- einer Einrichtung zum Ausgeben eines die Art des Füllgutes repräsentierenden Signals in Abhängigkeit von der Ermittlung eines Rührwerks.

22. Füllstandmessgerät, das nach dem Impulsechoprinzip arbeitet und eine aus den reflektierten Echosignalen generierte Hüllkurve auswertet, mit einer oder mehreren der Vorrichtungen nach einem der Ansprüche 14-18.

**Claims**

1. A method for rough discrimination between the liquid or bulk material state of a filling material in a container by using a level measuring device scanning a reflected echo signal, wherein the rough discrimination is made depending on the width of the individual echoes of an envelop in one echo signal.

2. The method according to claim 1,
**characterized in that** the number of echoes having a width of more than one comparative echo width and the number of echoes having a width of less than the comparative echo width is determined, and the greater echo number determined is used for the rough discrimination.

3. The method according to claim 1 or 2, **characterized by** the following steps:

- determining the widths of individual echoes in one echo signal of an envelop,
- determining the number of echoes having a width that is greater than or equal to a comparative echo width (x),
- determining the number of echoes having a width that is smaller than a comparative echo width (x), and
- outputting a signal determining the type of filling material depending on the determined number of echo widths having a greater value.

4. The method according to any of the preceding claims, **characterized by** additionally determining the number of equidistant echoes in one echo signal and outputting a signal determining the type of filling material also depending on the determined number of equidistant echoes.

5. The method according to claim 4, **characterized in that** the distance between adjacent echoes is measured, and all echoes having therebetween a distance falling inside a predetermined tolerance range are summed up as equidistant echoes.

**6.** The method according to any of the preceding claims, **characterized in that** the rough discrimination is made in addition by taking into account the determination of an agitator by using the level measuring device, wherein for detecting whether an agitator is present, the echoes of a current envelop are compared with the corresponding echoes of the previous envelop for determining a variation of amplitude.

**7.** The method according to claim 6, **characterized in that** the variation of amplitude determined from the comparison of two consecutive envelops is compared with a comparative value (x2), and if it is detected that the variation of amplitude is greater than the comparative value (x2) a signal representing liquid is output.

**8.** A method for rough discrimination between the liquid or bulk material state of a filling material in a container by using a level measuring device scanning an echo signal, wherein the rough discrimination is made depending on the number of equidistant echoes in one echo signal.

**9.** The method according to claim 8, **characterized by**

- determining the number of equidistant echoes in one echo signal, and
- outputting a signal determining the type of filling material depending on the determined number of equidistant echoes.

**10.** The method according to claim 8 or 9, **characterized in that** the determined number of equidistant echoes is compared with a comparative number (x1), wherein for a number of equidistant echoes greater than the comparative number (x1) the signal characterizing liquid is output.

**11.** A method for rough discrimination between the liquid or bulk material state of a filling material in a container by using a level measuring device scanning an echo signal, wherein the rough discrimination is made depending on the determination of an agitator, wherein for detecting whether an agitator is present, the echoes of a current envelop are compared with the corresponding echoes of the previous envelop for determining a variation of amplitude.

**12.** The method according to claim 11 or 12, **characterized in that** the variation of amplitude determined from the comparison of two consecutive envelops is compared with a comparative value (x2), and if it is detected that the variation of amplitude is greater than the comparative value (x2) a signal representing liquid is output.

**13.** The method according to claim 1 and 8 and/or 11 or according to claim 8 and 11, **characterized in that** the respective rough discrimination is multiplied by a weighting factor.

**14.** A device for rough discrimination between the liquid or bulk material state of a filling material in a container, comprising

- a device for determining the echo widths of the echoes of a generated envelop,
- a device for determining the number of echoes having an echo width greater than a comparative echo width and the number of echoes having an echo width smaller than the comparative echo width, and
- a filling material type signal output device, which outputs a signal representing liquid if the number of echoes having an echo width greater than a comparative echo width is greater than the number of echoes having an echo width smaller than a comparative echo width.

**15.** The device according to claim 14, **characterized in that** there is in addition a device, with which the number of equidistant echoes in one echo signal can be determined, and the filling material type signal output device is configured so as to output a signal representing liquid if the number of echoes having an echo width greater than a comparative echo width is greater than the number of echoes having an echo width smaller than a comparative echo width and the number of equidistant echoes is greater than a comparative value.

**16.** The device according to claim 15, **characterized in that** the additional device is configured so that the distance between adjacent echoes can be measured, and all echoes having a distance therebetween falling within a predetermined tolerance range can be summed up as equidistant echoes.

**17.** The device according to any of claims 14 to 16, **characterized in that** in addition, an agitator detecting device is present, which is configured for detecting an agitator so as to be able to compare the echoes of a current envelop with the corresponding echoes of the preceding envelop for determining a variation of amplitude, and that the filling material type signal output device is embodied so as to output a signal representing liquid if an agitator is determined in addition.

18. The device according to claim 17, **characterized in that** the agitator detecting device is configured so that the variation of amplitude determined from the comparison of two consecutive envelops is compared with a comparative value (x2), and if it is detected that the variation of amplitude is greater than the comparative value (x2) a signal representing liquid is output.

19. The device according to any of claims 14 to 18, **characterized in that** in addition, there is a device allowing to determine the number of equidistant echoes in one echo signal.

20. A device for rough discrimination between the liquid or bulk material state of a filling material in a container, comprising

    - a device for determining the number of equidistant echoes of a generated envelop, and
    - a device for outputting a signal determining the type of filling material depending on the determined number of equidistant echoes.

21. A device for rough discrimination between the liquid or bulk material state of a filling material in a container, comprising

    - a device for determining an agitator by evaluating the echo of a generated envelop, wherein the device is configured for detecting an agitator so as to be able to compare the echoes of a current envelop with the corresponding echoes of the preceding envelop for determining a variation of amplitude,
    - a device for outputting a signal representing the type of filling material depending on the determination of an agitator.

22. A level measuring apparatus, operating according to the impulse echo principle, and evaluating an envelop generated from the reflected echo signals, comprising one or more of the devices according to any of claims 14 to 18.

## Revendications

1. Procédé de différenciation grossière du contenu d'un récipient entre liquide et matériaux en vrac moyennant l'utilisation d'un dispositif de mesure du niveau de remplissage analysant un signal d'écho réfléchi, dans lequel la différenciation grossière est effectuée en fonction de la largeur des différents échos d'une enveloppante dans un signal d'écho.

2. Procédé selon la revendication 1, **caractérisé en ce que** le nombre d'échos avec une largeur supérieure à une largeur de référence et le nombre d'échos avec une largeur inférieure à une largeur de référence sont déterminés et le plus grand nombre d'échos déterminé est pris en compte pour la différenciation grossière.

3. Procédé selon la revendication 1 ou 2, **caractérisé par** les étapes suivantes :

    - détermination de la largeur des différents échos dans un signal d'écho d'une enveloppante,
    - détermination du nombre d'échos avec une largeur supérieure ou égale à une largeur de référence (x),
    - détermination du nombre d'échos avec une largeur inférieure à une largeur de référence (x), et
    - émission d'un signal définissant la nature du contenu en fonction du nombre de largeurs d'écho déterminé avec la plus grande valeur.

4. Procédé selon l'une quelconque des revendications précédentes, **caractérisé par** la détermination supplémentaire du nombre d'échos équidistants dans un signal d'écho et émission d'un signal définissant la nature du contenu, également en fonction du nombre déterminé d'échos équidistants.

5. Procédé selon la revendication 4, **caractérisé en ce que** la distance entre des échos voisins est mesurée et tous les échos dont la distance des uns par rapport aux autres se situe dans une plage de tolérances prédéfinie sont totalisés en tant qu'échos équidistants.

6. Procédé selon l'une quelconque des revendications précédentes, **caractérisé en ce que** la différenciation grossière est effectuée moyennant l'utilisation du dispositif de mesure du niveau de remplissage en tenant compte en plus de la détection d'un mélangeur, sachant que pour détecter la présence d'un mélangeur, les échos d'une enveloppante actuelle sont comparés aux échos correspondants de l'enveloppante précédente pour déterminer une variation d'amplitude.

**7.** Procédé selon la revendication 6, **caractérisé en ce que** la variation d'amplitude, déterminée à partir de la comparaison de deux enveloppantes successives, est comparée à une valeur de référence (x2), et un signal caractérisant un liquide est émis s'il s'avère que la variation d'amplitude est supérieure à la valeur de référence (x2).

**8.** Procédé de différenciation grossière du contenu d'un récipient entre liquide et matériaux en vrac moyennant l'utilisation d'un dispositif de mesure du niveau de remplissage analysant un signal d'écho, dans lequel la différenciation grossière est effectuée en fonction du nombre d'échos équidistants dans un signal d'écho.

**9.** Procédé selon la revendication 8, **caractérisé par**

- la détermination du nombre d'échos équidistants dans un signal d'écho et
- l'émission d'un signal définissant la nature du contenu en fonction du nombre déterminé d'échos équidistants.

**10.** Procédé selon la revendication 8 ou 9, **caractérisé en ce que** le nombre déterminé d'échos équidistants est comparé à une valeur de référence (x1), un signal caractérisant un liquide étant émis si le nombre d'échos équidistants est supérieur à la valeur de référence (x1).

**11.** Procédé de différenciation grossière du contenu d'un récipient entre liquide et matériaux en vrac moyennant l'utilisation d'un dispositif de mesure du niveau de remplissage analysant un signal d'écho, dans lequel la différenciation grossière est effectuée en fonction de la détection d'un mélangeur, sachant que pour détecter la présence d'un mélangeur, les échos d'une enveloppante actuelle sont comparés aux échos correspondants de l'enveloppante précédente pour déterminer une variation d'amplitude.

**12.** Procédé selon la revendication 11 ou 12, **caractérisé en ce que** la variation d'amplitude, déterminée à partir de la comparaison de deux enveloppantes successives, est comparée à une valeur de référence (x2), et un signal caractérisant un liquide est émis s'il s'avère que la variation d'amplitude est supérieure à la valeur de référence (x2).

**13.** Procédé selon les revendications 1 et 8 et/ou 11 ou selon les revendications 8 et 11, **caractérisé en ce que** la différenciation grossière correspondante est multipliée par un facteur de pondération.

**14.** Dispositif de différenciation grossière du contenu d'un récipient entre liquide et matériaux en vrac, comportant

- un dispositif destiné à déterminer les largeurs des échos d'une enveloppante générée,
- un dispositif destiné à déterminer le nombre d'échos avec une largeur d'écho supérieure à une largeur de référence et le nombre d'échos avec une largeur d'écho inférieure à la largeur de référence,
- un dispositif d'émission de signaux définissant la nature du contenu, qui émet un signal caractérisant un liquide lorsque le nombre d'échos avec une largeur d'écho supérieure à une largeur de référence est supérieur au nombre d'échos avec une largeur d'écho inférieure à une largeur de référence.

**15.** Dispositif selon la revendication 14, **caractérisé en ce qu'**il est prévu en plus un dispositif qui permet de déterminer le nombre d'échos équidistants dans un signal d'écho, et le dispositif d'émission de signaux définissant la nature du contenu est conçu de telle sorte qu'il émet un signal caractérisant un liquide lorsque le nombre d'échos avec une largeur d'écho supérieure à une largeur de référence est supérieur au nombre d'échos avec une largeur d'écho inférieure à une largeur de référence et lorsque le nombre d'échos équidistants est supérieure à une valeur de référence.

**16.** Dispositif selon la revendication 15, **caractérisé en ce que** le dispositif supplémentaire est conçu de telle sorte que la distance entre des échos voisins peut être mesurée et tous les échos dont la distance des uns par rapport aux autres se situe dans une plage de tolérances prédéfinie sont totalisés en tant qu'échos équidistants.

**17.** Dispositif selon l'une quelconque des revendications 14 à 16, **caractérisé en ce qu'**il est prévu en plus un dispositif de détection d'un mélangeur, qui est conçu de telle sorte que, pour détecter la présence d'un mélangeur, les échos d'une enveloppante actuelle peuvent être comparés aux échos correspondants de l'enveloppante précédente pour déterminer une variation d'amplitude, et **en ce que** le dispositif d'émission de signaux définissant la nature du contenu est conçu de telle sorte qu'il émet un signal caractérisant un liquide si la présence supplémentaire d'un mélangeur est détectée.

**18.** Dispositif selon la revendication 17, **caractérisé en ce que** le dispositif de détection d'un mélangeur est conçu de telle sorte que la variation d'amplitude, déterminée à partir de la comparaison de deux enveloppantes successives, est comparée à une valeur de référence (x2), et un signal caractérisant un liquide est émis s'il s'avère que la variation d'amplitude est supérieure à la valeur de référence (x2).

**19.** Dispositif selon l'une quelconque des revendications 14 à 18, **caractérisé en ce qu'**il est prévu en plus un dispositif qui permet de déterminer le nombre d'échos équidistants dans un signal d'écho.

**20.** Dispositif de différenciation grossière du contenu d'un récipient entre liquide et matériaux en vrac, comportant

- un dispositif destiné à déterminer le nombre d'échos équidistants dans une enveloppante générée et
- un dispositif destiné à émettre un signal définissant la nature du contenu en fonction du nombre déterminé d'échos équidistants.

**21.** Dispositif de différenciation grossière du contenu d'un récipient entre liquide et matériaux en vrac, comportant

- un dispositif destiné à détecter un mélangeur par l'analyse des échos d'une enveloppante générée, le dispositif étant conçu de telle sorte que, pour détecter la présence d'un mélangeur, les échos d'une enveloppante actuelle peuvent être comparés aux échos correspondants de l'enveloppante précédente pour déterminer une variation d'amplitude,
- un dispositif destiné à émettre un signal définissant la nature du contenu en fonction de la détection d'un mélangeur.

**22.** Dispositif de mesure du niveau de remplissage qui fonctionne selon le principe par écho d'impulsion et analyse une enveloppante générée à partir des signaux d'écho réfléchis, comportant un ou plusieurs des dispositifs selon l'une quelconque des revendications 14 à 18.

Fig. 1

Fig. 2

Fig. 3

Hüllkurve

Detektion der
Echos aus der
Hüllkurve

Bestimmen von
Amplitude und
Echobreite jedes
Echos

Breite größer x? — Nein

Ja

Anzahl der Echos
mit Breite größer x
erhöhen

Anzahl der Echos
mit Breite kleiner x
erhöhen

Nein

alle Echos
bearbeitet?

Ja

Verhältnis Echos
größer x zu kleiner x
größer y? — Nein

Ja

Anwendung ist
Schüttgut

Anwendung ist
Flüssigkeit

Information ob das Echobild von einer
Flüssigkeitsanwendung oder von einer
Schüttgutanwendung stammt

# Fig. 4

Hüllkurve

Detektion der Echos aus der Hüllkurve

Bestimmen des Echoortes jedes Echos

Distanz des Echos zu anderen Echos äquidistant?

Ja → Anzahl der äquidistanten Echos erhöhen

Nein

alle Echos bearbeitet?

Nein

Ja

Anzahl der äquidistanten Echos größer x?

Nein

Ja

Anwendung ist Flüssigkeit

Anwendung ist Schüttgut

Information ob das Echobild von einer Flüssigkeitsanwendung oder von einer Schüttgutanwendung stammt

**Fig. 5**

Information ob das Echobild von einer
Flüssigkeitsanwendung oder von einer
Schüttgutanwendung stammt

# Fig. 6

Hüllkurve

```
┌─────────────────┐   ┌─────────────────┐   ┌─────────────────┐
│   Anwendungs-   │   │   Anwendungs-   │   │   Anwendungs-   │
│erkennung anhand │   │erkennung anhand │   │ erkennung ob    │
│  der Echoorte   │   │  der Echobreite │   │    Rührwerk     │
│                 │   │                 │   │  vorhanden ist  │
└─────────────────┘   └─────────────────┘   └─────────────────┘
```

Kombination der
Eingangsinformationen

Kombination der
Eingangsinformationen
größer x?

Nein

Ja

Anwendung ist
Flüssigkeit

Anwendung ist
Schüttgut

Information ob das Echobild von einer
Flüssigkeitsanwendung oder von einer
Schüttgutanwendung stammt

Fig. 7